# EUROPEAN PATENT APPLICATION

(11) **EP 3 508 054 A1**
(43) Date of publication of application: **10.07.2019**
(21) Application number: 17800556.7
(22) Date of filing: 01.09.2017
(51) Int. Cl.: A01G 27/02

(54) **IRRIGATION SYSTEM FOR BONSAIS**

(30) Priority: 02.09.2016 ES 201631145
(71) Applicant: Losada Pla, Nuria, 43500 Tortosa (TARRAGONA) (ES); Losada Pla, Manuel Francesc, 43500 Tortosa (TARRAGONA) (ES)
(72) Inventor: Losada Pla, Nuria, 43500 Tortosa (TARRAGONA) (ES); Losada Pla, Manuel Francesc, 43500 Tortosa (TARRAGONA) (ES)
(74) Representative: Herrero & Asociados, S.L.
(86) International application number: PCT/ES2017/070594
(87) International publication number: WO 2018/042069

(57) **Abstract**

The irrigation system for bonsais comprises a water tank (3), a pot (2) inside of which a substrate (31) for a bonsai is housed and irrigation means (5; 28) of the water in said tank (3) to said substrate (31), characterized in that the system comprises a moisture detector (29) arranged in said substrate (31), which detects the degree of moisture of the substrate (31) and determines the activation of said irrigation means (5; 28) when the degree of moisture of the substrate (31) is lower than a predetermined value.

It allows for the irrigation and automatic and intelligent care specific to the cultivation of bonsais.

## Description

The present invention relates to an irrigation system for bonsais, which allows for the irrigation and automatic and intelligent care specific to the cultivation of bonsais.

### Background of the invention

The existing autonomous irrigation systems in the field of bonsais, for the care thereof at a domestic level, comprise the so-called bottom irrigation system by capillary action, or by capillary action by means of an absorbent wick.

When this irrigation system is used, the pots of the bonsai, with the perforated bases thereof, are placed over a container that contains water by means of a tank, where the transfer of water from the tank to the pot is carried out by means of the connection of one or several absorbent wicks that connect the water from the tank to the substrate of the pot, inserting the wick inside the substrate through the holes of the base of the pot. What this wick does is transmit the water from the tank to the substrate in a continuous manner by means of capillary action, such that the substrate of the pot can absorb the water from the tank.

This irrigation method has the drawback of producing excess moisture, since the wick continuously transmits water to the substrate, an event controlled by the caretaker, that with time favors the rotting of the roots and the soil, also resulting in said substrate becoming acidic.

Apart from said drawback, this system does not facilitate nor take into account the correct drainage of the substrate, nor the ventilation/aeration, given that it favors the acidification of the lower portion of the substrate of the pot, inhibiting the correct development of the roots, or that in summer, it makes it so that the constant heat and humidity can produce fungi in the roots that rot the entire plant in one or two days, and when it is visible, it is generally too late.

This system also has the drawback that it is only suitable for limited irrigation during short periods of time when the caretaker is absent, with which it does not constitute an autonomous irrigation system that can be used as a habitual irrigation method for the care of this type of plants, especially delicate according to the type of species.

Another drawback to be taken into account is that by means of this method, other needs of the plant, as well as the ideal conditions for the care thereof, are not solved, care that largely requires that the caretaker have expert knowledge, and without it, ends in the death of the plant soon after acquiring it.

It also has the drawback that it is not very practical or functional when carrying out other kinds of tasks that this type of plant needs for the care thereof, as well as an aesthetic that is not in harmony with the philosophy of the world of bonsai.

In the tradition of the world of bonsai, there are three elements that make up the presentation thereof for the caretaker: the bonsai, the pot thereof and a small, short table that is placed under the pot, so that the pot, with the holes in the lower base thereof, does not make contact with the surface where the bonsai has been displayed.

In the world of bonsais and its philosophy, these plants play an important decorative role, especially in the west. If the caretaker decides to incorporate an autonomous capillary wick irrigation system into this basic system, it is placed between the table and the pot, configuring an unwieldy and unattractive assembly, while not being very functional due to the reasons described below.

Furthermore, the continuous moisture that the capillary wick system provides hinders the correct drainage of the substrate. Preventing the substrate from flooding is very important.

Bonsai irrigation requires more attention and frequency than any plant cultivation at a domestic level, since it is a type of cultivation with pots that contain little substrate, both in volume as well as depth. According to the climate, the season and the species, irrigation needs can oscillate between several irrigations per day in summer, and one irrigation or less per week in winter. The best way to perform the irrigation is to soak all of the substrate starting from the upper portion, preventing the water from flooding in the base.

Apart from irrigation, bonsais need many other types of specific and delicate care, such as irrigating the canopy, pruning, fertilizing, changing the substrate, etc. If we perform these tasks with a capillary wick irrigation system, we run into the drawback that it is not very practical, since in each operation we would find the wicks inserted in the substrate hanging from the pot and dripping, needing to introduce or remove the wick according to the type of operation we seek to perform, whether with the tank or with the substrate.

The lack of autonomous irrigation systems, which are suitable for the habitual care of this type of plants, that at the same time precisely provide the necessary water at the necessary time of moisture for the substrate depending on the species of the plant, thus enabling preservation of the acidity and moisture of the substrate, and that at the same time solve the rest of the drawbacks mentioned, makes it so that the present invention is configured as a comprehensive solution to all of this, resulting in a functional and intelligent assembly that covers all the specific necessities of the plant type.

### Description of the invention

The object of the present invention is to provide an irrigation system for bonsais that is practical, compact and functional in all the tasks that make up the care of this type of plants, providing the caretaker with the advantage that they, without being skilled in the art, can successfully cultivate any species of bonsai, forgetting the rigorous care thereof with regard to irrigation, pruning, fertilizing, canopy irrigation or substrate changing needs, further providing an ideal micro-climate around the plant that improves the environmental conditions necessary for the care of the plant.

Regarding irrigation, the system intelligently enables applying water in the part of the substrate that is most suitable for irrigation, applying it correctly, and in the optimal moment for that type of species.

The present invention is defined according to the characteristics of claim 1. Optional additional characteristics are defined in the dependent claims.

The system guarantees the water needs of the bonsai by means of a tank of variable capacity, according to the size of the plant, which provides, by means of pumping or suction from the tank, the necessary water for the plant, making it circulate from the tank to the substrate of the plant through ducts and nozzles, located in different points of the pot.

In the preferred embodiment, these nozzles are located around the upper part of the substrate of the pot, in a variable amount in order to provide homogeneous irrigation, amount and distribution that will vary depending on the size of the plant, for which reason the system will be configured in different standard sizes.

These nozzles enable irrigation starting from the upper part of the substrate, simulating the natural irrigation method by rain, as in nature, and irrigation by spraying, which favors the environmental moisture around the plant and the irrigation of the canopy, creating a micro-climate around the plant when necessary. The micro-climate is complemented by the moisture proceeding from the evaporation of the water of the substrate, together with the evaporation of the water proceeding from the drainage of the pot that is deposited in the base container, and together with the moisture that evaporates from the transpiration of the plant.

By means of a moisture detector located in the substrate, the system guarantees the ideal moment for irrigation, as well as the amount of water and the irrigation duration time, as well as the interval, being configured as an intelligent system, which enables covering the different water needs of each species (indoor species and outdoor species of varied climates).

For the successful cultivation of these plants, it is necessary that the alternating curve of moisture-dryness that stimulates the growth thereof and is what evolution has made them follow be precise in order to not fail in the cultivation thereof. The irrigation frequency will be determined by several parameters: dryness/moisture of the substrate, species, plant size and soil/substrate mixture, among others. They are parameters that the system incorporates by means of a caretaker/plant interface that is configured by the caretaker, for example, by means of a mobile phone application, configuring the automation of the system according to the type of species acquired.

This means that the system is able to detect when the tree needs to be irrigated and in what way, activating irrigation when the substrate is slightly dry, irrigating the upper portion of the substrate at slow intervals so that the root ball and the entirety of the root system of the plant are wet, with the aim of optimizing water absorption.

This irrigation system, at the same time, avoids harming and dragging the upper portion of the substrate of the pot. The system also incorporates an environmental moisture detector, with the aim of knowing when the canopy should be sprayed.

The pot of the system further incorporates holes in the part where the substrate is housed with the aim of guaranteeing the correct drainage thereof after each irrigation, carrying the water of this drainage to the base container of the system, where it is deposited so that it can provide moisture around the plant by means of environmental evaporation.

The present invention provides a compact, monobloc system that enables covering all the needs for optimal care, meeting the decorative and practical objective that is sought in the western world.

In this way, with the present invention the dedication and time needed are reduced for the care of this type of small tree. Failure in the cultivation of the first bonsai of a novice caretaker, in an expensive type of plant, makes it so that more often than not the consumer does not acquire another new model, moreover, if they do, they usually fail again. Therefore, another objective that the present invention seeks is that the first cultivation does not fail, and therefore, a potential consumer is not lost, and that this consumer is converted into a habitual one who becomes interested in the cultivation of and passion for this type of plant.

### Brief description of the drawings

For the purpose of helping to make the foregoing description more readily understandable, it is accompanied by a set of drawings which, schematically and by way of illustration and not limitation, represent several embodiments.
Figure 1 shows a first embodiment of the system according to the present invention in an elevation view, cross-sectioned along the line I-I in Figure 2;
Figure 2 is a plan view of the system of Figure 1, without the base thereof;
Figure 3 is an exploded cross-sectional elevation view of the system of Figure 1;
Figure 4 shows a second embodiment of the system according to the present invention in an elevation view, cross-sectioned along the line IV-IV in Figure 5;
Figure 5 is a plan view of the system of Figure 1, without the base thereof;
Figure 6 shows a third embodiment of the system according to the present invention, in the cross-sectional elevation figure;
Figure 7 shows a fourth embodiment of the system according to the present invention, in the cross-sectional elevation figure;
Figure 8 shows a fifth embodiment of the system according to the present invention;
Figure 9 is an exploded view of the system of Figure 8; and
Figure 10 is an elevation view cross-sectioned along the line V-V in Figure 9.

### Description of preferred embodiments

All the shown embodiments of the system are preferably intended for growing bonsais, mainly for the use thereof at a domestic level, by means of an intelligent and compact system that enables rigorous and expert care of the plant, which also is functional and aesthetic. Nevertheless, this system can also be used for the cultivation of other types of plants, also intended to be configured as an urban garden of domestic use, for example.

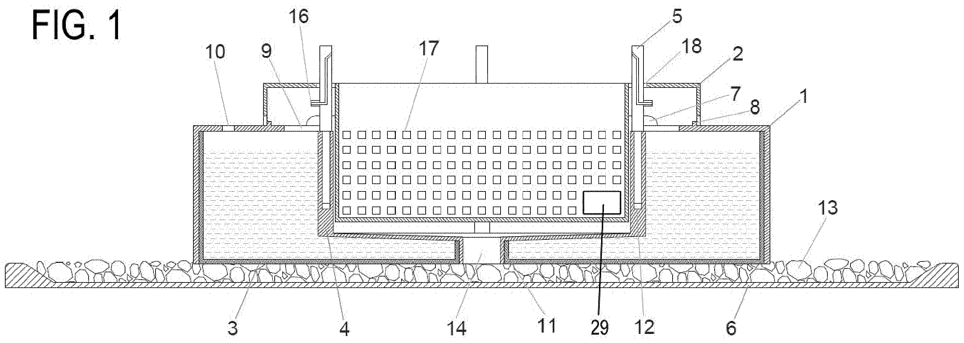

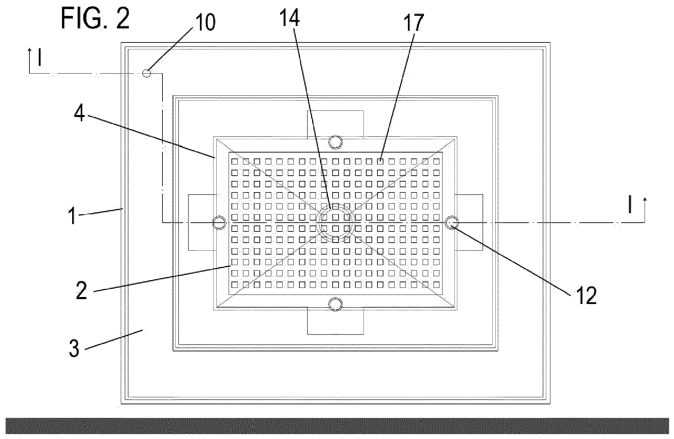

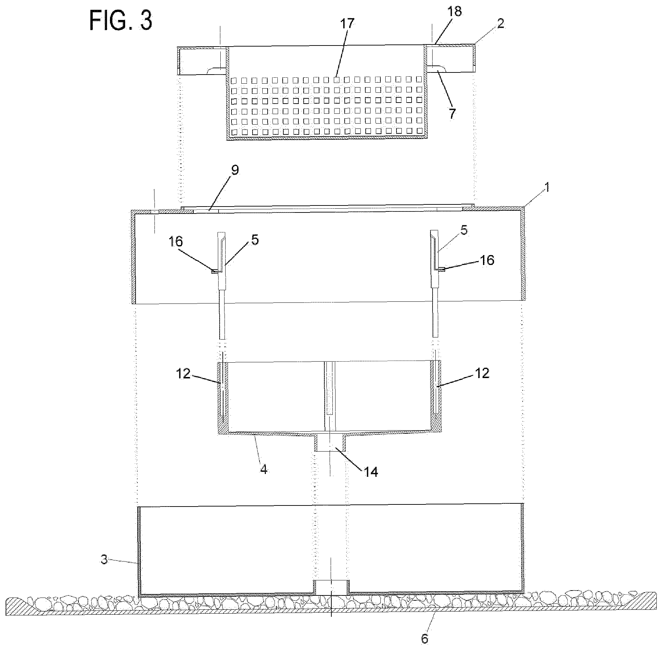

In Figures 1 to 3 a first embodiment of the system according to the present invention is shown.

The system according to the present invention comprises a base 6, which acts by way of a base tray of the system. This base 6 receives water drained from an upper assembly through a drainage point 14.

The base 6 is formed by a plurality of stones 13, for example, volcanic or decorative, or even sand, with the aim of creating a micro-climate by evaporation of the water drained to said base 6.

In this embodiment, the evaporation of the drained water is favored, which provides environmental moisture and a micro-climate around the plant. Nevertheless, there is also the possibility of recirculating the drained water back to the tank, by means of a pumping system.

This base 6 further has a second function, that of preventing the irrigation from projecting water onto the surface where the bonsai is displayed, a factor to be taken into account when the system has the ability to spray the canopy.

The system according to the present invention also comprises a water tank 3 provided with an inner body 4 fitted into a connector 11. Said tank 3 enables housing the water of the system in order to provide autonomy with regards to irrigation.

The system according to the present invention also comprises at least one moisture detector 29 that is inserted into the substrate, which enables the configuration of an automatic and intelligent irrigation system for this type of small tree.

This moisture sensor 29 can also be complemented with other electronic measuring devices (not shown in the figures) for other types of parameters: water level, temperature, light, etc.

The tank 4 includes housings 12 that can be located in any point of the perimeter on the side closest to the plant together with a pot 2. In this embodiment, four blind housings 12 are detailed, distributed symmetrically around said edge, although these can vary from a single housing to those necessary to cover all of the perimeter of the surface object of irrigation. Irrigation nozzles 5 are located in these housings 12, fitted in said housings 12.

It should be noted that these housings 12 can also be through housings, such that the connection from one tube for the passage of the water to the nozzles 5 can be carried out in a connector 16 or by the base of the nozzle 5.

These connectors 16 enable the connection of the nozzles 5 to a pumping system, and in turn interconnecting them so that they work in series or in parallel by means of the pumping system.

Furthermore, this housing 12 makes it easier for the nozzle 5 to remain integrated in the tank 3, such that when the pot 2 is to be removed from the assembly of the system, it can exit freely and separate itself from the system without dragging any type of connection, and without needing to disconnect any component, in this way facilitating any care task of the plant (pruning, changing the substrate, trimming the roots) that requires removing the pot 2 in order to work with the plant in another space, constituting a comfortable and functional system.

This is achieved by means of holes 18 of the pot 2, which are arranged according to the number of irrigation nozzles 5 that are arranged in the system, with the aim of facilitating the removal of the pot 2.

The pot 2 has drainage holes 17 located in the base thereof and on the sides of the perimeter in the part that makes up the casing of the housing of the substrate inside the pot 2. These drainage holes 17 have a geometry that varies according to the diameter of the substrate, so that it does not drain out between the holes. In the case of fine substrates, the system can also incorporate a geotextile fabric in the pot 2 in order to prevent it from draining out from said drainage holes 17 after an irrigation. The drainage of the pot 2 is carried out through a drainage point 14 from the tank 3 to the base 6.

The pot 2 can have ventilation openings 7 on the side of the perimeter thereof, with the aim of facilitating the aeration of the substrate, at least on one of the sides thereof, with variable shape, arrangement and geometry.

A cover 1 is arranged between the pot 2 and the tank 3, provided with a point 10 for filling the tank 3, with the aim of facilitating the refilling of water when it runs out, with a variable location, geometry and size.

Furthermore, this cover 1 comprises a projection 8 in all or part of the perimeter, in order to correctly fit the pot 2. The cover further comprises slots 9 for facilitating the passage of tubes of the system that are connected in the irrigation nozzles 5, in the connector 16 or in the base of the nozzles 5.

The slots 9 are also variable in number, arrangement and geometry according to the number of nozzles 5. These slots 9 enable removing the cover 1 of the system without needing to disconnect any tubes or remove the nozzles 5. This cover 1 at the same time is used so that once the pot 2 is withdrawn, said cover 1 can be removed in order to access the tank 3 for system maintenance purposes, since it is where the pumping system and the automation system can be housed.

With the goal of automating the irrigation, the system according to the present invention comprises at least one moisture detector 29 inserted into the substrate, as indicated previously, being able to incorporate other measuring devices for monitoring other parameters.

Once a certain dryness parameter has been reached after the irrigation, the system monitors it by means of the moisture detector 29 in order to know when it should activate the automatic irrigation. This system enables irrigating in stages, instead of all at once, with which it favors the absorption of the substrate. The system measures the moisture of the substrate, even though it can also monitor the temperature, environmental moisture, light and water level, and if desired, even the fertilizer level, incorporating a small tank integrated in the system that contains the liquid fertilizer in this last case. These elements are not shown in the drawings for reasons of simplicity, and would be inserted into an independent housing located in the tank 3 or located in the base or the sides of the system.

The control of these parameters is carried out preferably by means of software, for example, by means of a mobile phone application that would be activated when the plant is acquired, pairing up the species and system. Starting with said pairing, all the parameters are then automated depending on the application database that would contain information referring to the irrigation and care of said species, automating the irrigation, including the fertilizer, and informing the user when to prune, wire, trim the roots or change the substrate.

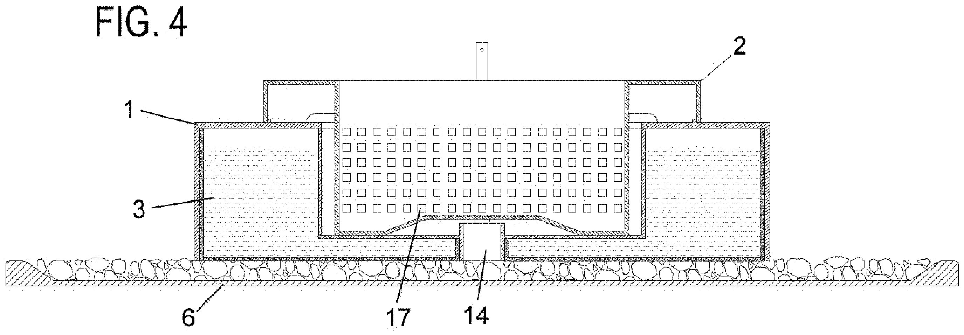

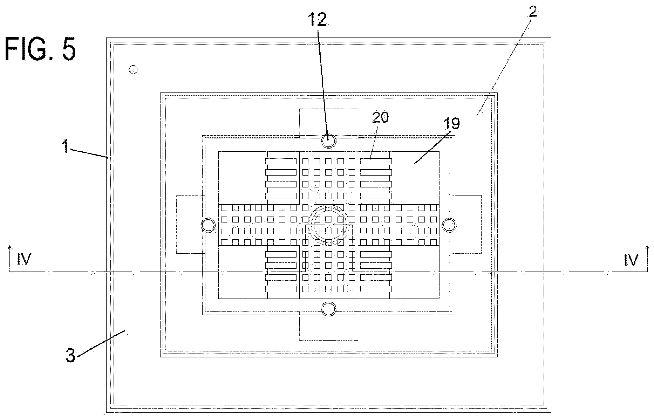

In figures 4 and 5 a second embodiment of the system according to the present invention is shown.

For reasons of simplicity, the same reference numbers are used to identify the same or equivalent elements.

The main difference in this second embodiment with respect to the first embodiment is the drainage of the system, favoring that only one part of the water drained from the pot 2 passes to the base tray 6.

In this embodiment, the drainage point 14 is elevated with respect to the base 6, defining a projection, such that it acts as an overflow line, as seen in Figure 4. This projection makes it so that a part of the water drained from the pot 2 remains retained in the inner body 4 of the tank 3.

The rest of the water from the drainage overflows through said drainage point 14 to the base 6, preventing the drainage of 100% of the water drained and leaving a part of it to be reabsorbed through the substrate of the pot 2 by means of holes 20, shown in Figure 5, which can be of variable shape and geometry. To do so, these holes 20 are incorporated into the pot 2 by means of four legs 19 located in the lower part of the pot.

These legs 19 and these holes 20 enable the substrate to reabsorb the part of the water that has not been drained, and that has remained trapped in the inner body 4 up to the height of the overflow line of the drainage point 14 to the base 6. This variation of the inner body 4 facilitates the contact of the pot 2 with the upper surface of the inner body 4, where said part of drainage water that is not transferred to the base 6 is housed.

It should be noted that the rest of the elements of the system of the second embodiment are the same as the elements of the system of the first embodiment, although they are neither shown nor described in this second embodiment for reasons of simplicity.

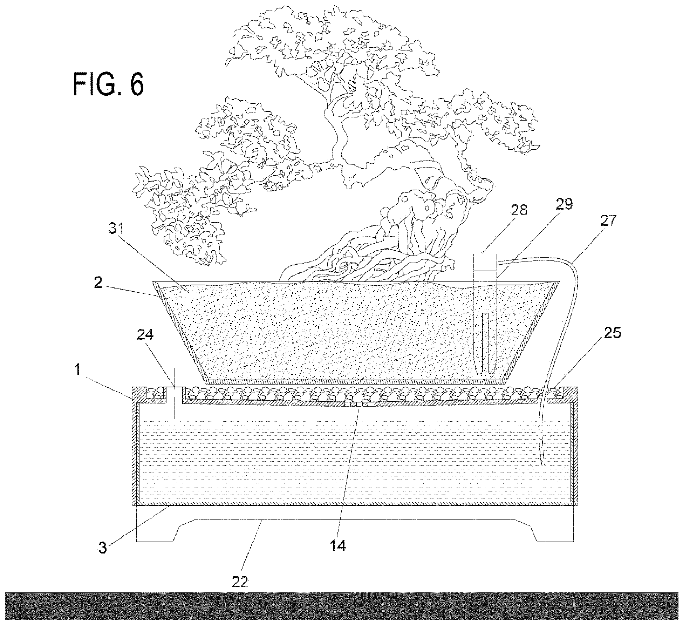

In figure 6 a third embodiment of the system according to the present invention is shown. As in the previous embodiments, for reasons of simplicity, the same reference numbers are used to identify the same or equivalent elements.

This embodiment is a simpler and more economical variant of the system, with less aesthetic functionality than the previous embodiments.

This embodiment enables, furthermore, that the traditional cultivator, with a passion for ceramic oriental pots, can combine the use of the system of the present invention and the benefits thereof with the use of said pots.

This embodiment of the system does not include a base, and the tank 3 does not comprise an inner body 4. Furthermore, the tank 3 can comprise legs 22 for facilitating the grip of the assembly.

The cover 1 has an inclined surface under the pot 2, which can be made of ceramic, able to drain at some point, such as, for example, in the drainage points 14, all the water drained from the pot 2 after the irrigation, and redirect it back to the tank 3. The drainage point 14 to the tank has variable geometry, size and location. This drainage point 14 can be a grate if the user wants to incorporate volcanic stone or similar, or decorative stone, in the cover 1, so that it does not drain out into the tank.

Sand can also be incorporated over the cover 1, in which case the drainage point 14 would be equipped with geotextile fabric in order to prevent the passage of the sand to the tank 3. This embodiment with sand as a decorative element enables creating a sand zen garden around the bonsai, integrating two products in one.

The cover 1 further comprises a filling hole 24 for filling the tank 2, of variable size, location and geometry, as well as a through hole 25 for the passage of cabling and a water tube 27 from an irrigation point 28. The irrigation point 28 is connected to a moisture detector 29 that is inserted in a substrate 31 housed in the pot 2, and that can incorporate a tube for drip irrigation or an irrigation nozzle (not shown in figure 6).

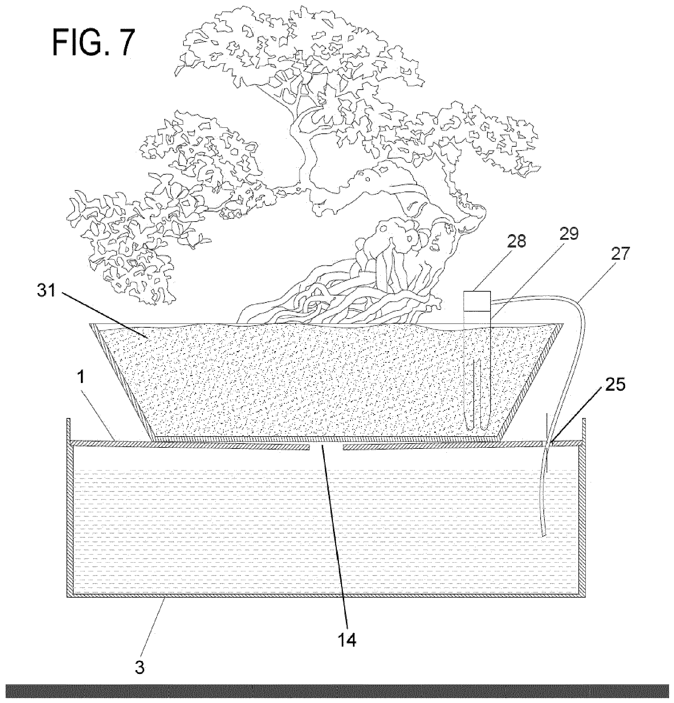

In Figure 7 a fourth embodiment of the system according to the present invention is shown. Also in this case, the same reference numbers are used to identify the same or equivalent elements.

This fourth embodiment is very similar to the third embodiment, although the cover 1 and the tank 3 are somewhat different.

As in the previous embodiment, the cover 1 comprises a drainage point 14 to the tank 3, which can also contain a grate, and a hole 25 for the passage of the cabling and the water tube 27 from the irrigation point 28, which is the same as the previous embodiment.

The cover 1 in this embodiment is not a casing-type cover of the tank 3. Said cover 1 can also incorporate a filling hole for filling the tank 3.

It should be noted that the first and second embodiments can be applied as a domestic urban garden, furthermore, the first, second, third and fourth embodiments can also be used for any type of plant cultivated in pots at a domestic level.

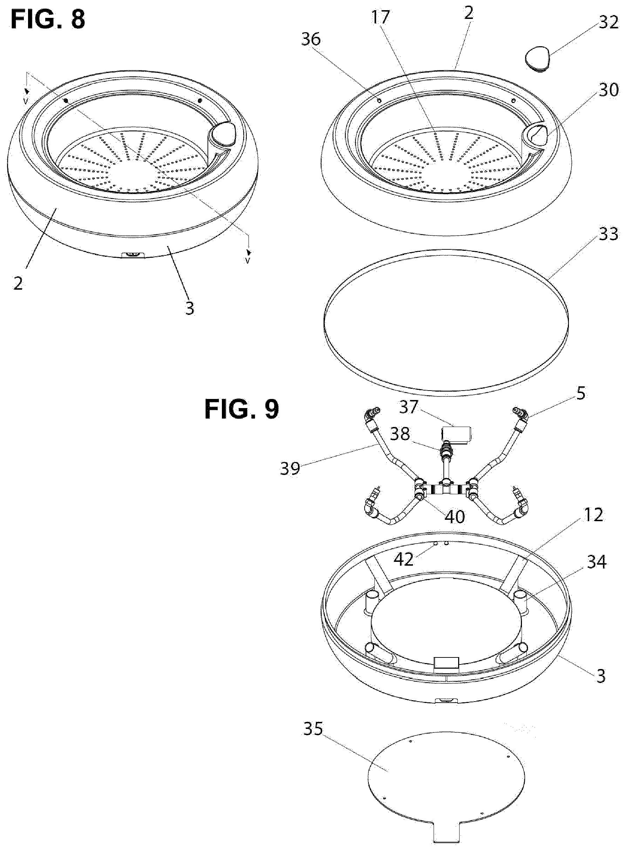

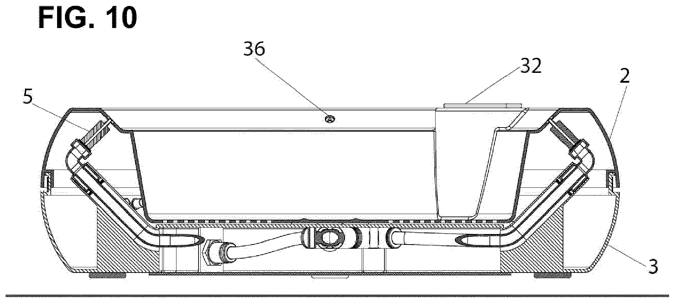

In Figures 8, 9 and 10 a fifth embodiment of the system according to the present invention is shown. Also in this case, the same reference numbers are used to identify the same or equivalent elements.

It should be noted that although it has not been shown in these figures for reasons of simplicity, this embodiment further comprises a substrate placed on the inside of the pot 2 and a moisture detector in said substrate, in any suitable position.

The main difference in this fifth embodiment with respect to the first and second embodiments is the simplicity of the system in number of components, being configured as a more compact embodiment, where the drainage system also varies, in this case favoring all the water drained from the pot 2 to pass to the tank 3, through the drainage holes 17, and being recirculated into the irrigation by means of a pumping element 37.

In this embodiment, so that the water of the tank 3 does not come into contact with the substrate of the pot 2, in case the tank 3 overflows, it comprises overflow holes 34 that would drain the excess water to the outside to the base of the tank 3.

In order to fill it with water, the system comprises a filling hole 30 and a cover 32.

The tank 3 incorporates a projection in the base thereof by way of a housing in the lower part in order to house the entire hydraulic and electronic system (ducts, electronic boards, battery, etc.), with a cover 35. For the passage of the pumping element 37 and ducts 39 from said housing to the inside of the tank 3, bushings 38 are used with the aim of guaranteeing the seal thereof.

The rest of the hydraulic system passes through housings 12 that enable locating all the irrigation elements in the system and positioning the nozzles 5 such that they coincide with the holes 36 of the pot 2 as the injection point of the irrigation to the substrate of the plant. The pot 3 also comprises a connection point 40 in the outer body thereof for recharging the electronic system.

In this embodiment, the system incorporates a perimeter light 33 with informative and decorative functions, as well as other lighting points 42 for lighted indication of several functions of the system (malfunction, empty tank, etc.).

Despite the fact that reference has been made to a specific embodiment of the invention, it is evident for the person skilled in the art that numerous variations and changes may be made to the system described, and that all the aforementioned details may be substituted by other technically equivalent ones, without detracting from the scope of protection defined by the attached claims.

## Claims

1. An irrigation system for bonsais, comprising a water tank (3), a pot (2) inside of which a substrate (31) for a bonsai is housed and irrigation means (5; 28) of the water in said tank (3) to said substrate (31), **characterized in that** the system comprises a moisture detector (29) arranged in said substrate (31), which detects the degree of moisture of the substrate (31) and determines the activation of said irrigation means (5; 28) when the degree of moisture of the substrate (31) is lower than a predetermined value.

2. The system according to claim 1, wherein said irrigation means comprise one or more irrigation nozzles (5).

3. The system according to claim 1, wherein said irrigation means comprise an irrigation point (28) fed by a tube (27) from said tank (3).

4. The system according to claim 1, which also comprises a water level, temperature, light and/or environmental moisture detector.

5. The system according to claim 1, wherein said pot (2) comprises a plurality of drainage holes (17) arranged in the bottom and/or in the side walls.

6. The system according to claim 1, which also comprises at least one drainage point (14) between the tank (3) and the pot (2).

7. The system according to claim 6, wherein said drainage point (14) is arranged in an inner body (4) of said tank (3).

8. The system according to claim 6, wherein said drainage point (14) defines a projection that acts as an overflow line of the water of said tank (3).

9. The system according to any of the preceding claims, which also comprises a base (6).

10. The system according to claim 9, wherein said base (6) comprises a plurality of stones (13) or sand.

11. The system according to any of the preceding claims, which also comprises a cover (1) placed over said tank (3).

12. The system according to claim 11, wherein a plurality of stones (13) or sand is placed over said cover (1), the pot (2) being situated over said stones (13) or over said sand.

13. The system according to claim 2, wherein said tank (3) comprises a plurality of housings (12) for said irrigation nozzles (5).

14. The system according to claims 7 and 13, wherein said housings (12) are arranged in said inner body (4).
